# EUROPEAN PATENT SPECIFICATION

(11) **EP 2 495 681 B1**
(45) Date of publication and mention of the grant of the patent: **20.03.2019**
(21) Application number: 12150667.9
(22) Date of filing: 10.01.2012
(51) Int. Cl.: G06F 21/60, G06F 21/62, G06F 21/57

(54) **Remote pre-boot authentication**
Entfernte Authentifizierung vor dem Hochfahren
Authentification à distance d'avant démarrage

(30) Priority: 11.01.2011 US 201161431687 P; 14.11.2011 US 201113295602
(43) Date of publication of application: 05.09.2012
(73) Proprietor: SafeNet, Inc., Belcamp, MD 21017 (US)
(72) Inventor: Dunn, Chris, Manotick, Ontario K4M 1J4 (CA); Dietz, Russell, Redwood City, CA California 95120 (US); Snyder, Philip, Chapel Hill, NC North Carolina 27514 (US); Frindell, Alan H., Seattle, WA Washington 98115 (US)
(74) Representative: Scheer, Luc

(56) References cited:
- WO-A1-2004/003824
- WO-A1-2009/129192
- WO-A1-2010/144123
- WO-A2-2011/002777
- US-A1- 2003 131 257
- US-A1- 2009 282 266
- US-A1- 2010 138 827
- US-A1- 2010 161 998

## Description

### BACKGROUND OF THE INVENTION

In order to protect a computer system against unauthorized copying of its programs and/or data, it has been proposed to use "full disk encryption." When the computer is inactive, the entire long term non-volatile storage, typically a hard disk, is encrypted, except for a small "pre-boot environment" (PBE). The pre-boot environment typically contains a bootstrap loader and sufficient functional code to authenticate that it is authorized to run, and to obtain and use one or more data encryption keys (DEK) or "disk wrapping keys" (DWK) to decrypt the remainder of the hard disk. The pre-boot environment may instead decrypt only a second section of the hard disk, typically including a full operating system that boots up with more elaborate access controls over further parts of the disk.

The authentication may comprise, for example, requesting that a password be input at a console interface, and verifying that the password is correct. It may comprise detecting the presence of a USB device, smartcard, or other hardware token, and verifying that the token is correct, and/or fetching an actual DEK from the token. It may comprise obtaining and verifying biometric data of a human operator. The authentication then typically includes activating the necessary hardware interface to obtain the authenticating input. Other authentication mechanisms may be used, including those that use the network, such as the Kerberos authentication protocol, or the authentication in access protocols such as LDAP and RADIUS.

Document US 2009/282266 shows a virtual machine which is encrypted when stored and then launched by an external agent which also has access to the decryption keys.

The above procedure can be highly secure when booting a physical computer from cold, because there is little opportunity for malware and hackers to intrude into the pre-boot authentication process, whether to read and steal passwords and keys or to procure an unauthorized boot-up by presenting passwords or keys previously stolen or forged.

However, in the case of a virtual machine, external security cannot be guaranteed. A "virtual machine" is a largely self-contained environment running in part of a "host" computer, under control of a "hypervisor" running on the host computer. The hypervisor provides, controls, and manages access from the virtual machine to the hardware resources of the host computer. A virtual machine may be used to emulate an operating system or other environment different from that of the physical computer. A virtual machine may be used to segregate, for security or resource allocation purposes, processes running in the virtual machine from processes running in other virtual machines or natively on the host computer. A virtual machine may be used for a combination of reasons.

Because the host computer must be active and the hypervisor must be running before the virtual machine can even be created, security and integrity of the hypervisor and other functionality at the host computer level cannot always be guaranteed. In particular, it has recently been proposed to use virtual machines in "cloud" computing. In cloud computing, a resource provider may maintain servers accessible over the internet or other remote path, and allocates resources on those servers to various clients. Alternatively, the resource provider may be aggregating and redistributing resources that he obtains from third parties. The resources provided may range from storage and/or processing of the client's data using the provider's programs to the provision of space and processing power within which the client can run an entire virtual machine. The proprietor of the virtual machine may then have almost no control over, and indeed almost no knowledge of, the host environment or the other clients who are running processes in that environment.

Under those conditions, the risk of a breach of security of the subject virtual machine, down to and including the loss or theft of a copy of the entire virtual machine, is considerable.

### SUMMARY OF THE INVENTION

According to one embodiment of the invention, there are provided systems, methods, and computer programs for full disk encryption of a disk image that boots up to a virtual machine. The pre-boot environment is provided with a web or other network or other remote access interface that communicates with the user's local terminal using a secure protocol (such as HTTPS, SSH, or IPSEC), preferably through a secured management interface provided as part of the cloud infrastructure. The pre-boot environment authenticates itself to the user, as well as the user to the pre-boot environment. Only when both ends are authenticated to the satisfaction of the other is the Disk Wrapping Key (DWK) to decrypt the disk image uploaded to the pre-boot environment of the virtual machine. The disk wrapping key may be uploaded from the user's local computer, or from a separate key management server or appliance.

In a further embodiment, the pre-boot environment requests the disk wrapping key from the key management server using information supplied by the user during the authentication process. Because separate communication paths are used between the pre-boot environment and the user and between the pre-boot environment and the key management server, an attacker would have to intercept both paths in order to gain full information on the authentication and decryption process.

Other aspects of the invention include methods, computers and computer systems, computer programs, and non-transitory computer-readable storage media containing computer programs.

### BRIEF DESCRIPTION OF THE DRAWINGS

The above and other aspects, features, and advantages of the present invention may be more apparent from the following more particular description of embodiments thereof, presented in conjunction with the following drawings. In the drawings:
FIG. 1 is a schematic diagram of an embodiment of a computer system.
FIG. 2 is a flow-chart.

### DETAILED DESCRIPTION OF THE PREFERRED EMBODIMENTS

A better understanding of various features and advantages of the present methods and devices may be obtained by reference to the following detailed description of illustrative embodiments of the invention and accompanying drawings. Although these drawings depict embodiments of the contemplated methods and devices, they should not be construed as foreclosing alternative or equivalent embodiments apparent to those of ordinary skill in the subject art.

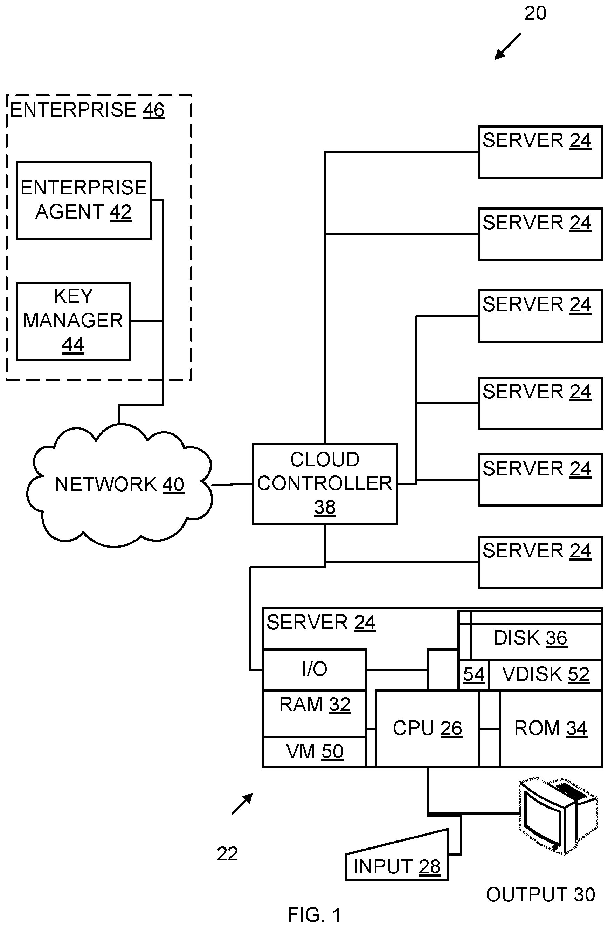

Referring to the drawings, and initially to FIG. 1, one embodiment of a cloud computing system indicated generally by the reference number 20 comprises a cloud 22 comprising a number of servers 24 each comprising, among other equipment, a processor 26, input and output devices 28, 30, random access memory (RAM) 32, read-only memory (ROM) 34, and magnetic disks or other long-term storage 36. The servers 24 are connected through a cloud controller 38 to an external network or other communications media 40.

Also connected to external network 40 are an enterprise agent 42 and an enterprise key manager 44 of an enterprise 46. The enterprise agent 42 may itself be a computer similar in general structure to the servers 24, but under direct control of a human administrator through a console 48 comprising input and output devices 28, 30. The key manager 44 may itself be a computer similar in general structure to the servers 24, but under direct or indirect control of the human administrator at console 48. A typical cloud 22 may be connected to numerous independent enterprise agents 42, any or all of which may have their own key managers 44. However, in the interests of simplicity and clarity, the present specification describes and illustrates in detail a single enterprise agent 42 and key manager 44.

In operation of cloud 22, the cloud controller 38 tracks available resources within cloud 22 and assigns resources to meet demands from enterprises 46 through their agents 42. Cloud controller 38 also tracks resources already assigned to an enterprise 46, and ensures that when an enterprise agent 42 calls on such resources they are made available transparently, after verification that the specific enterprise agent 42 is entitled to access the specific assigned resource. Where the cloud activities of the enterprise 46 to which enterprise agent 42 belongs include providing services or information to third parties, cloud controller 38 may also manage communications between such third parties and resources assigned to enterprise agent 42. The cloud controller 38 may itself be one or more servers 24 or structurally similar computer devices. Various structures for clouds 22, and their methods of operation, are well known in the art and, in the interests of conciseness, are not further described here.

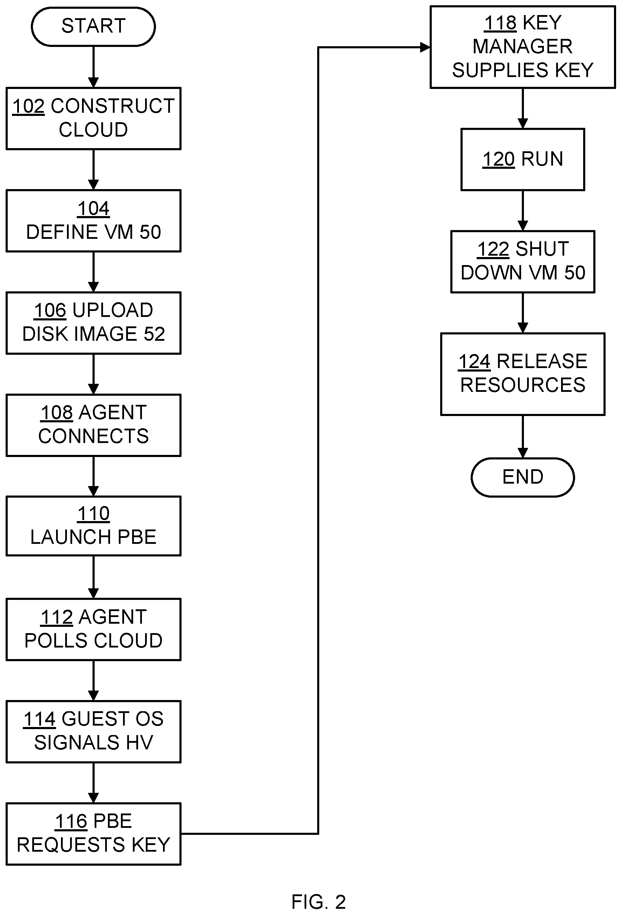

Referring now also to FIG. 2, in one example of a method of cloud computing, in step 102 cloud 22 is constructed, organized, and put into operation. Although this is a complex procedure, it may be carried out in a manner known to those of ordinary skill in the art, and in the interests of conciseness is not described in more detail here.

In step 104, enterprise 46, through its enterprise agent 42, requests resources from cloud 22 for a virtual machine (VM) 50. Cloud 22, through the activity of cloud controller 38, assigns storage 36 on which the virtual machine can be stored as a disk image when not in use, and authorizes the assignment of processor capacity 26 and RAM 32 to run the virtual machine when it is in use. In step 106, the administrator of enterprise agent 42 uploads a disk image 52 of virtual machine 50 to cloud storage 36. The disk image 52 is strongly encrypted, except for a small pre-boot environment (PBE) 54. As is well known in the art, the strength of encryption may be chosen depending on circumstances. In general, the strength of encryption should at least be considerably stronger than a typical password (typically no more than a few dozen bits), and may be at least sufficient that a brute-force attack is computationally unfeasible without an expenditure of resources greater than the value to an attacker, or the harm to enterprise 46, that would arise from successful decryption. At the time of writing, 128-bit symmetric encryption or equivalent may be appropriate for many purposes. However, it is expected that the computer processing power available for brute force attacks will increase with time, so the strength of encryption may be increased to compensate. Disk image 52 does not include the decryption key, even in encrypted or obfuscated form. The administrator of enterprise agent 42 also uploads to cloud controller 38 an attestation key such as a checksum, hash, or other authenticating data for disk image 52.

Alternatively, encrypted disk image 52 may be created by launching a clean virtual machine 50 within cloud 22, and provisioning it from enterprise agent 42 with necessary software and data. Virtual machine 50, using credentials provided by enterprise agent 42, then contacts key manager 44 using a secure connection, and obtains a key with which to encrypt itself. This approach may be preferred if extensive configuration of virtual machine 50 is required as part of its setup. Where virtual machine 50 is initially provisioned in the form of an encrypted disk image, configuration will take place the first time virtual machine 50 is launched.

In step 108, administrator of enterprise agent 42 desires to activate virtual machine 50. Enterprise agent 42 establishes a secure connection with cloud controller 38, typically using a private channel system already established independently of the present methods and systems. This channel may use generally available communications protection protocols such as Secure Sockets Layer or IPSec, or may use another form of protection previously agreed between administrators of enterprise agent 42 and cloud controller 38. One cloud computing system currently in commercial operation uses HTTPS and/or SSH with credentials issued (or certified) by the cloud controller. That way, an enterprise agent 42 and cloud controller 38 can communicate to each other using this channel. Enterprise agent 42 sends a command to cloud controller 38 alerting cloud controller 38 that virtual machine 50 is to be launched. The command includes authenticating credentials of enterprise agent 42. The command may include a nonce (number used once) or other session identifier to guard against record-and-replay attacks on the communications. In addition to a nonce, enterprise agent 42 may supply an SSL client certificate (and private key) that can be used one-time. The key manager 44 would then expect this certificate to be presented in step 116 below, and only allow it to be used one time. As a precaution in case the cloud controller 38 is not entirely trusted, these initial authenticating data may be provided in encrypted form. The decryption key must then be present in unencrypted (although optionally obfuscated) form in the pre-boot environment of the virtual machine 50. The VM 50 then sets up a second private channel, directly to the enterprise agent 42, protected even against the cloud controller 38. In this embodiment, the private channel between the enterprise agent 42 and guest VM 50 is a HTTPS link. Assuming the client side of the SSL is initiated from the guest VM 50, the client certificate can either be a statically assigned key pair (per guest) or a one-time key pair as described above.

In addition to the SSL authentication, the guest VM 50 collects a "measurement" of its operating environment. This measurement is presented as a signed attestation of its environment. Initially the measurement will include meta-data about the virtualization environment, such as VM IP address, cloud infrastructure name, locality, and VM instance ID, all collected through a virtualization meta-data interface.

The measurement provided through the meta data is proof of where the guest VM 50 is being launched. That is, it measures the hardware platform, BIOS code and hypervisor that are running underneath the guest VM. This provides cryptographic assurance both that nothing unexpected is running as part of the infrastructure, and also that a single and specific version of the infrastructure is running. When the key manager receives the signed attestation, the key manager first validates the signature to make sure it came from a trusted authority (the infrastructure's Certifying Authority) and then compares the measurement (ultimately a hash fingerprint) against a set of known good fingerprints in a white list. The measurement is intended to be equivalent (and eventually identical to) a TPM measurement, and in an alternative embodiment, the cryptographic measurement of the environment may actually be signed by the virtualization server's TPM chip.

This verified measurement provides a hardware-root-of-trust back to the enterprise agent 42 of exactly where the VM 50 is running. The enterprise agent 42 can then cancel the launch of VM 50, or take other defensive measures, if the reported environment is not consistent with the enterprise agent's expectation of what the environment should be.

In step 110, cloud controller 38 verifies the attestation key for disk image 52, assigns appropriate processor 26 and RAM 32 resources, initializes virtual machine 50, and launches pre-boot environment 54. At this stage, virtual machine 50 is still encrypted, apart from pre-boot environment 54. The encrypted parts of disk image 52 may remain physically on disk storage 36, with the relevant storage being mapped into virtual machine 50 by cloud controller 38. Cloud controller 38 also passes to pre-boot environment 54 at least part of the command received in step 108.

In step 112, enterprise agent 42 calls the newly launched virtual machine 50 using the second private channel, and obtains the VM 50's IP address and other identifying information. Once the second private channel is established, communications are protected even against the cloud controller 38.

In step 114, pre-boot environment 54 verifies the credentials supplied by enterprise agent 42, to ensure it has been properly launched. Pre-boot environment 54 then contacts key manager 44, presenting its own identifying credentials and at least a part of the launch command received from enterprise agent 42 including the nonce. Pre-boot environment 54 may also add its own nonce to the message.

The pre-boot environment can be largely conventional and, in the interests of conciseness will not be described in unnecessary detail. As will be apparent to the skilled reader, some customization is appropriate. For example, since any user input arrives over the second private channel, the pre-boot environment does not need hardware device drivers for local user interface devices, but does have the appropriate interface for the second private channel, and is programmed to retrieve certain data over the second private channel.

In step 116, key manager 44 verifies the credentials presented by pre-boot environment 54. Key manager 44 may have received, or may request, a copy of the nonce or of an additional one-time password directly from enterprise agent 42 or, where the nonce is pseudorandom, may be able to generate an identical nonce for verification purposes. Key manager 44 may also have received, or may request, a notification from enterprise agent 42 that a launch of an instance of virtual machine 50 is authorized.

In step 118, key manager 44 supplies to pre-boot environment 54 the correct disk wrapping key to enable pre-boot environment 54 to decrypt disk image 52, and launch the operative instance of virtual machine 50. The disk wrapping key is deleted as soon as disk image 52 has been decrypted.

In step 120, virtual machine 50 proceeds to run, with enterprise agent 42 acting as a remote console. Once virtual machine 50 is up and running, a secure private connection from enterprise agent 42 into virtual machine 50 can be established.

In step 122, virtual machine 50 is commanded to shut down. Virtual machine 50 then contacts key manager 44 over a secure connection, and requests a disk wrapping key with which to encrypt itself. This does not need to be the same key that was used last time virtual machine 50 was decrypted. For maximum security a new key may be generated every time virtual machine 50 is shut down to an encrypted disk image 52. Key manager 44 then retains that key (or if an asymmetric cipher is used, at least the other key of the same pair) until the encrypted disk image is next decrypted.

Where the data used by virtual machine 50 is separately encrypted, a data encryption key remains in active use as long as the virtual machine 50 is running, and therefore usually remains in unencrypted form in the virtual machine 50. A change of key then requires either deliberate decryption and re-encryption of the entire encrypted data, or tracking of the last key version used for each part of that data. In those scenarios, it may be preferred to implement a change of data encryption key immediately after the virtual machine 50 is launched, to reduce the risk of problems if the virtual machine 50 crashes unexpectedly. In any event, however, if any key is not originated by the key manager 44, it is in general desirable for that key to be stored to the key manager 44 before it is used, to minimize the risk that a crash can cause a lost key, and leave data unreadable.

In the interests of simplicity, the above description largely assumes that the entire disk image 52 is decrypted when the virtual machine 50 is launched. However, in a practical system, the actual disk image 52 may not be entirely decrypted and loaded, but only individual blocks may be paged into and out of virtual machine 50's active memory space. Each block may then be decrypted when it is loaded, and re-encrypted or discarded (if unchanged) when it is unloaded. In that scenario, the disk wrapping key remains in use as long as virtual machine 50 is active, and the above discussion of managing data encryption keys applies largely to the disk wrapping key. One or more separate data encryption keys may then still be used, to provide a second level of security, and/or to provide a finer granularity for control of access to important data.

Only after the disk encryption has been completed and the key deleted, in step 124 the cloud controller 38 is notified of the shutdown and releases the resources (other than the hard disk space containing the encrypted disk image) assigned to virtual machine 50.

As may be seen from the foregoing description, the present methods, programs, and apparatus make it possible to avoid having the disk wrapping key for disk image 52 present in the cloud 22 except for a very short period while virtual machine 50 is actually being launched. Compared with prior systems where the disk wrapping key, typically in obfuscated form or weakly encrypted by a password, is permanently present in the cloud, the vulnerability of the key is vastly reduced. Even if the cloud controller 38 is malign, vulnerability can be greatly reduced. At the time of decryption, the cloud controller 38 may see only a key that is about to become obsolete. At the time of encryption, the key has been deleted before cloud controller 38 is informed that disk encryption is happening. Consequently, cloud controller 38 can obtain a useful disk wrapping key only by constantly monitoring the activity of virtual machine 50.

The data encryption key, or the key wrapping key in a system with memory block swapping, is more vulnerable, because it typically remains in the virtual machine 50 in unencrypted form as long as the virtual machine is operative. However, even the data encryption key can typically be captured only by a memory dump of the space occupied by virtual machine 50, or equivalent measures. Also, the key is still not present in the pre-boot environment 54 when the virtual machine 50 is not operative, which removes a major vulnerability.

Monitoring of virtual machine 50, or a memory dump, while it is active would in any case usually enable cloud controller 38 to gather copies of the programs and data in their unencrypted forms, so any further increase in security of the disk encryption key may not be useful against a malign cloud controller 38. The best precaution against such an attack is a security audit of the cloud infrastructure, to ensure that the tools for a memory dump are not available, even to the personnel administering the cloud 22. However, such tools could typically operate at a level of the cloud invisible to the virtual machine 50 or enterprise administrator 42. It would therefore be the responsibility of the owner of the cloud 22 to execute and enforce such an audit, and to satisfy enterprise 46 that it is being adequately enforced.

The non-encrypted pre-boot environment 54 is small enough and static enough that its integrity can be verified by existing technology. For example, the Trusted Computing Group (TCG) proposes using a hardware device, the Trusted Platform Module (TPM) chip, that can verify a signature and prevent code that is not trusted, or that has been improperly modified, from being loaded. That supervision can include verifying both the host computer's own code and the operating system and application code that is to be run within a guest virtual machine. Cryptographic measurement both of the pre-boot environment 54 itself and of the cloud infrastructure can be carried out by TPM chips and GRC auditing tools to allow enterprise agent 42 to receive cryptographic attestations of the cloud infrastructure as part of the boot. Control of the process, and the attestation, are handed to the pre-boot environment 54, which reports the measurement home to the enterprise agent 42 and/or key manager 44. Only once the measurement and attestation have been validated is the disk wrapping key released to the guest virtual machine 50.

In an embodiment, the pre-boot environment 54 is a stand-alone executable. However, it is small, and has only a very limited interface between itself and the host operating system. The only thing this operating system interface needs to do is pass the disk wrapping key into the encryption driver component of the host operating system in step 118. Because the encryption driver can be provided as part of the initial setup of the virtual machine 50, it can be under control of the programmers who create the pre-boot environment, and they can create a common interface for many operating systems. As a result, it is possible for the pre-boot environment 54 to be shareable across many types and versions of operating systems. Even where the host operating systems are too different for the executable pre-boot environment 54 to be shared, the source code can be made shareable with little or no change over a wider range of host operating systems.

Although specific embodiments have been described, various modifications are possible, the scope of the invention is defined by the appended claims. The features of the different embodiments may be combined into one embodiment.

For example, as described, cloud controller 38 combines various functions, including acting as a firewall and gateway for cloud 22, acting as a resource manager for cloud 22, and hypervisor for virtual machine 50. These and other functions may be grouped or distributed between various physical computers and/or logical entities in various ways. Enterprise agent 42 and key manager 44 have been described as separate devices. They may instead be functions of a single physical hardware device. However, it is still preferred that communications between the cloud 22 and the enterprise agent 42, and communications between cloud 22 and key manager function 44, be through separate channels, to reduce the risk of an eavesdropper intercepting a complete set of messages.

In the interests of simplicity, it has been assumed in describing the embodiments that each of the principal components is an ordinary general-purpose computer specially programmed. However, specialized hardware is commercially available. For example, dedicated key managers are available that resemble the system unit of a general purpose computer, but with limited input/output facilities, sometimes with additional security measures, and sometimes with a more secure encryption unit on a separate expansion card within the system unit. Reference is made to the FIPS 140-2 standard for examples of appropriate precautions for various levels of security. Hardware Security Modules such as the SafeNet Luna SA product line can be used to enhance the security of the key management system. As another example, the keys could be stored on a portable device, such as a USB device or smart card, that can be kept in a physically secure location when the keys are not in active use.

As described with reference to the drawings, one encrypted disk image 52 corresponds to one virtual machine 50, and is saved as a new encrypted disk image 52 when it shuts down. Alternatively, if no new data needs to be saved when virtual machine 50 is shut down, encrypted disk image 52 may be maintained permanently in cloud 22, and a new decrypted copy may be generated each time virtual machine 50 is launched, and simply discarded when virtual machine 50 is shut down. In that alternative, changing the encryption key requires explicitly deleting the encrypted disk image 52 and creating a new disk image 52 with the new key (not shown), or explicitly decrypting the disk image and re-encrypting it with the new key. In a large system using the last-mentioned alternative, several similar virtual machines 52 may be running in parallel, and it may be efficient to launch them from a single encrypted disk image 52.

In the described embodiments, the launch of the virtual machine is initiated by a human administrator at the console of enterprise agent 42. However, because the launch process does not use a weak password that cannot safely be stored on the system, human intervention is not necessary. The launch of the virtual machine may be initiated at a scheduled time, or in response to external events (such as a need to shut down a previous or parallel instance of the virtual machine 50).

If it is desired to maintain data in encrypted form while virtual machine 50 is running, over and above the disk-level encryption of blocks of disk image 52 that are not currently loaded into memory, that may be done in manners known in the art, including, without limitation, encryption at virtual machine 50 using either a locally held data encryption key (which is encrypted by the disk wrapping key when not in use) or a data encryption key obtained from key manager 44 or from another source, or remote encryption using key manager 44 or another resource as a data encryption appliance. Data encryption appliances such as the SafeNet DataSecure product line can be used to enhance the security of the key management system, especially where there is a small amount of highly sensitive data, so that a level of security qualitatively stronger than the disk wrapping encryption is justified. Where actual data encryption is done in a data encryption appliance, the data encryption keys are never exposed in the memory of virtual machine 50 and, with proper management, the actual data are exposed in unencrypted form for only the minimum amount of time necessary to process the data. Consequently, gathering a significant amount of unencrypted data would require continual monitoring of the virtual machine over significant periods, which should be comparatively easy to detect in a security audit of the cloud infrastructure.

In a further alternative, hardware security modules such as the above-mentioned SafeNet Luna SA or SafeNet DataSecure appliances could be hosted in the cloud 22. Provided any issues of trust regarding sharing of the hardware security module, or third-party control of the hardware security module, are adequately controlled, that could offer a significant improvement in efficiency.

Accordingly, reference should be made to the appended claims, rather than to the foregoing specification, as indicating the scope of the invention.

## Claims

1. A computer system (20) of securing a virtual machine (50), comprising:
- a host computer cloud (22) comprising a processor (26) and operative to support the virtual machine (50);
- an agent (42) under control of a user in communication with the cloud (22) over a network (40); and
- a key management server (44) in communication with the cloud (22) over the network (40);
**characterized in that** the cloud (22) is operative:
- to store the virtual machine (50), when not in use, except for a pre-boot environment (54), in a form of an encrypted disk image (52) on a non-volatile storage medium (36);
- when commanded by the agent (42) to launch the virtual machine from the encrypted disk image, to request (114) from the pre-boot environment to the key management server (44) a disk-wrapping key ; and
- to decrypt the encrypted disk image (52) using the disk-wrapping key to run the virtual machine when in use.

2. The computer system of claim 1, wherein the pre-boot environment remains a non-encrypted pre-boot environment (54).

3. The computer system of claim 1, wherein the agent (42) provides the cloud (22) with authentication credentials relating to the agent and the request (116) for the disk-wrapping key includes the authentication credentials relating to the agent (42).

4. A method of securing a virtual machine (50) in a cloud (22),
the method being **characterized by**:
- storing (106) the virtual machine (50), when not in use, except for a pre-boot environment (54), on a non-volatile storage medium (36) relating to a server (24) in a form of an encrypted disk image (52);
- the server (24) not having a key to decrypt the encrypted disk image (52);
- receiving (108) from an agent (42) over a network (40) a command to launch the virtual machine (50) from the encrypted disk image (52),;
- requesting (114) from the pre-boot environment to a key management server (44) over the network (40) a disk-wrapping key; and
- decrypting (120) the encrypted disk image (52) using the disk-wrapping key to run the virtual machine (50) when in use.

5. The method according to claim 4, wherein the command includes authenticating credentials relating to the agent (42).

6. The method according to claim 4 or 5, wherein the command includes a nonce or other session identifier.

7. The method according to claim 6, wherein the command further includes an SSL client certificate that can be used one time.

8. The method according to any of claims 4 to 7, wherein the authenticating information data is provided in an encrypted form,

9. The method according to any of claims 4 to 8, further comprising deleting the key from the server (24) as soon as the encrypted disk image has been decrypted.

10. The method according to any of claims 4 to 9, further comprising:
- when the virtual machine is commanded to shut down, requesting (122) to the key management server (44) over the network (40) a key to encrypt the virtual machine (50) as an encrypted disk image (52), the request including information authenticating the server (24) or the disk image (52);
- generating the encrypted disk image (52) with the key; deleting the key from the server (24); and
shutting down (122) the virtual machine (50).

11. The method of any of claims 4 to 10, comprising:
the agent (42) sending over the network (40) the command to launch the virtual machine (50); and
the agent (42) providing to the key management server (44) information relating to the command, and authorizing the key management server (44) to supply, over the network (40), in response to a request including corresponding authenticating information, a key to decrypt the encrypted disk image (52).

## Patentansprüche

1. Computersystem (20) zum Sichern einer virtuellen Maschine (50), umfassend:
- eine Hostcomputer-Cloud (22), die einen Prozessor (26) umfasst und betriebsfähig ist, die virtuelle Maschine (50) zu unterstützen,
- einen Agenten (42), der von einem Nutzer gesteuert ist und über ein Netzwerk (40) mit der Cloud (22) in Kommunikation steht,
- einen Schlüsselverwaltungsserver (44), der über das Netzwerk (40) mit der Cloud (22) in Kommunikation steht,
**dadurch gekennzeichnet, dass** die Cloud (22) betriebsfähig ist:
- die virtuelle Maschine (50), wenn nicht in Verwendung, mit Ausnahme einer Preboot-Umgebung (54) in Form eines verschlüsselten Plattenabbilds (52) auf einem nichtflüchtigen Speichermedium (36) zu speichern,
- bei Anweisung durch den Agenten (42), die virtuelle Maschine von dem verschlüsselten Plattenabbild aus zu starten, von der Preboot-Umgebung aus bei dem Schlüsselverwaltungsserver (44) einen Plattenumhüllungsschlüssel anzufordern (114), und
- das verschlüsselte Plattenabbild (52) unter Verwendung des Plattenumhüllungsschlüssels zu entschlüsseln, um die virtuelle Maschine, wenn in Verwendung, laufen zu lassen.

2. Computersystem nach Anspruch 1, wobei die Preboot-Umgebung eine unverschlüsselte Preboot-Umgebung (54) bleibt.

3. Computersystem nach Anspruch 1, wobei der Agent (42) der Cloud (22) den Agenten betreffende Authentifizierungsdaten bereitstellt und die Anforderung (116) des Plattenumhüllungsschlüssels die den Agenten (42) betreffende Authentifizierungsdaten beinhaltet.

4. Verfahren zum Sichern einer virtuellen Maschine (50) in einer Cloud (22),
wobei das Verfahren **gekennzeichnet ist durch**:
- Speichern (106) der virtuellen Maschine (50), wenn nicht in Verwendung, mit Ausnahme einer Preboot-Umgebung (54) auf einem mit einem Server (24) in Beziehung stehenden nichtflüchtigen Speichermedium (36) in Form eines verschlüsselten Plattenabbilds (52),
- wobei der Server (24) nicht über einen Schlüssel zum Entschlüsseln des verschlüsselten Plattenabbilds (52) verfügt,
- Empfangen (108) einer Anweisung, die virtuelle Maschine (50) von dem verschlüsselten Plattenabbild (52) aus zu starten, von einem Agenten (42) über ein Netzwerk (40),
- Anfordern (114) eines Plattenumhüllungsschlüssels von der Preboot-Umgebung aus bei einem Schlüsselverwaltungsserver (44) über das Netzwerk (40), und
- Entschlüsseln (120) des verschlüsselten Plattenabbilds (52) unter Verwendung des Plattenumhüllungsschlüssels, um die virtuelle Maschine (50), wenn in Verwendung, laufen zu lassen.

5. Verfahren nach Anspruch 4, wobei die Anweisung den Agenten (42) betreffende Authentifizierungsdaten beinhaltet.

6. Verfahren nach Anspruch 4 oder 5, wobei die Anweisung einen Einmal-Schlüssel oder eine andere Sitzungskennung beinhaltet.

7. Verfahren nach Anspruch 6, wobei die Anweisung ferner ein einmalig verwendbares SSL-Client-Zertifikat beinhaltet.

8. Verfahren nach einem der Ansprüche 4 bis 7, wobei die Authentifizierungsinformationsdaten in verschlüsselter Form bereitgestellt werden.

9. Verfahren nach einem der Ansprüche 4 bis 8, ferner umfassend ein Löschen des Schlüssels von dem Server (24), sobald das verschlüsselte Plattenabbild entschlüsselt wurde.

10. Verfahren nach einem der Ansprüche 4 bis 9, ferner umfassend:
- wenn an die virtuelle Maschine eine Anweisung zum Herunterfahren ergeht, Anfordern (122) eines Schlüssels bei dem Schlüsselverwaltungsserver (44) über das Netzwerk (40), um die virtuelle Maschine (50) als verschlüsseltes Plattenabbild (52) zu verschlüsseln, wobei die Anforderung Informationen beinhaltet, die den Server (24) oder das Plattenabbild (52) authentifizieren,
- Erzeugen des verschlüsselten Plattenabbilds (52) mit dem Schlüssel,
- Löschen des Schlüssels von dem Server (24), und
- Herunterfahren (122) der virtuellen Maschine (50).

11. Verfahren nach einem der Ansprüche 4 bis 10, umfassend:
- Senden der Anweisung zum Starten der virtuellen Maschine (50), bei dem Agenten (42), über das Netzwerk (40), und
- Bereitstellen die Anweisung betreffender Informationen, bei dem Agenten (42), an den Schlüsselverwaltungsserver (44) und Autorisieren des Schlüsselverwaltungsservers (44), in Reaktion auf eine entsprechende Authentifizierungsinformationen beinhaltende Anforderung über das Netzwerk (40) einen Schlüssel zum Entschlüsseln des verschlüsselten Plattenabbilds (52) zu liefern.

## Revendications

1. Système informatique (20) de sécurisation d'une machine virtuelle (50) comprenant :
- un cloud sur un ordinateur hôte (22) comprenant un processeur (26) et permettant de supporter la machine virtuelle (50) ;
- un agent (42) sous le contrôle d'un utilisateur qui communique avec le cloud (22) par l'intermédiaire d'un réseau (40) ; et
- un serveur de gestion de clés (44) qui communique avec le cloud (22) par l'intermédiaire du réseau (40) ;
**caractérisé en ce que** le cloud (22) permet de :
- stocker la machine virtuelle (50), lorsqu'elle n'est pas utilisée, sauf pour un environnement de pré-démarrage (54), sous la forme d'une image disque chiffrée (52) présente sur un support de mémorisation non volatile (36) ;
- lancer la machine virtuelle à partir de l'image disque chiffrée après en avoir reçu la commande de l'agent (42), afin de requérir (114), depuis l'environnement de prédémarrage vers le serveur de gestion de clés (44), une clé de chiffrement de disque ; et
- déchiffrer l'image disque chiffrée (52) à l'aide de la clé de chiffrement de disque pour exécuter la machine virtuelle lors de son utilisation.

2. Système informatique selon la revendication 1, dans lequel l'environnement de pré-démarrage demeure un environnement de pré-démarrage non chiffré (54).

3. Système informatique selon la revendication 1, dans lequel l'agent (42) fournit au cloud (22) des informations d'authentification relatives à l'agent et dans lequel la requête (116) de clé de chiffrement de disque inclut les informations d'authentification relatives à l'agent (42).

4. Procédé de sécurisation d'une machine virtuelle (50) dans un cloud (22), ce procédé étant **caractérisé par** :
- stocker (106) la machine virtuelle (50), lorsqu'elle n'est pas utilisée, sauf pour un environnement de pré-démarrage (54), sous la forme d'une image disque chiffrée (52) présente sur un support de mémorisation non volatile (36) relatif à un serveur (24) ;
- le serveur (24) ne disposant pas de clé pour déchiffrer l'image disque chiffrée (52) ;
- recevoir (108), depuis un agent (42), par l'intermédiaire d'un réseau (40), une commande pour lancer la machine virtuelle (50) à partir de l'image disque chiffrée (52) ;
- requérir (114), depuis l'environnement de pré-démarrage vers un serveur de gestion de clés (44) par l'intermédiaire du réseau (40), une clé de chiffrement de disque ; et
- déchiffrer (120) l'image disque chiffrée (52) à l'aide de la clé de chiffrement de disque pour exécuter er la machine virtuelle (50) lors de son utilisation.

5. Procédé selon la revendication 4, dans lequel la commande comprend des informations d'authentification relatives à l'agent (42).

6. Procédé selon la revendication 4 ou 5, dans lequel la commande comprend un nonce ou un autre identifiant de session.

7. Procédé selon la revendication 6, dans lequel la commande comprend en outre un certificat client SSL qui peut être utilisé une seule fois.

8. Procédé selon l'une des revendications 4 à 7, dans lequel les données relatives aux informations d'authentification sont fournies sous forme chiffrée.

9. Procédé selon l'une des revendications 4 à 8, comprenant, en outre, la suppression de la clé depuis le serveur (24) dès que l'image disque chiffrée est déchiffrée.

10. Procédé selon l'une des revendications 4 à 9, comprenant en outre :
- lorsque la machine virtuelle est commandée pour s'arrêter, requérir (122) du serveur de gestion de clés (44) par l'intermédiaire du réseau (40) une clé pour chiffrer la machine virtuelle (50) sous la forme d'une image disque chiffrée (52), la requête incluant des informations d'authentification du serveur (24) ou de l'image disque (52) ;
- générer l'image disque chiffrée (52) avec la clé ;
- supprimer la clé du serveur (24) ; et
- arrêter (122) la machine virtuelle (50).

11. Procédé selon l'une des revendications 4 à 10, comprenant :
- envoyer, par l'agent (42) par l'intermédiaire du réseau (40), la commande de lancement de la machine virtuelle (50) ; et
- fournir, par l'agent (42) au serveur de gestion de clés (44) des informations relatives à la commande et autoriser le serveur de gestion de clés (44) à fournir, par l'intermédiaire du réseau (40), une clé pour déchiffrer l'image disque chiffrée (52) en réponse à une requête incluant des informations d'authentification correspondantes.
